(19) **Europäisches Patentamt**

**European Patent Office**

**Office européen des brevets**

(11) **EP 1 517 073 A1**

(12) # EUROPEAN PATENT APPLICATION

(43) Date of publication:
**23.03.2005 Bulletin 2005/12**

(51) Int Cl.$^7$: **F16K 17/16**

(21) Application number: **03021294.8**

(22) Date of filing: **19.09.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Universita degli Studi di Trento
38100 Trento (IT)**

(72) Inventors:
• **Sglavo, Vincenzo Maria
38100 Trento (IT)**
• **Prezzi, Andrea
38068 Rovereto (Trento) (IT)**

(74) Representative: **Freyria Fava, Cristina
Buzzi, Notaro & Antonielli d'Oulx Srl,
Via Maria Vittoria 18
10123 Torino (IT)**

(54) **ESP glass rupture disk**

(57)     The present invention concerns the manufacture of ESP glass rupture disks with failure resistance higher than 320 MPa able to shatter into microscopic pieces following the stable growth of the superficial flaws. It also concerns the manufacture of ESP glass rupture disk having low variability of rupture pressure ($p_{max}$) values, i.e. having pre-determined fixed $p_{max}$ value.

The present invention is also directed to provide design criteria for the manufacture of ESP glass rupture disks having a pre-determined fixed failure resistance and pre-defined rupture pressure $p_{max}$.

## Description

### Field of the invention

The present invention relates to manufacturing overpressure safety systems (rupture disks) by means of Engineered Stress Profile (ESP) glass, starting from commercially available soda-lime float glass plates, and to the design criteria of ESP glass rupture disks.

### Background of the invention

Rupture disks are the sensitive part of pre-set fracture devices[1,2]. The rupture disk in the device fails at a given rupture pressure (or rated fracture pressure), $p_{max}$.

These devices are used e.g. to protect plants and apparatus against overpressure or underpressure which could lead to explosions or implosions.

There are two main applications: pressure containers and conduits subject to buffering. In the former case the excess pressure may be generated by unwanted chemical reactions, such as e.g. high temperature reactions or other factors. In the latter case, the excess pressure (or underpressure) is produced by buffering following the brusque closing of a valve (in hydroelectric plant) or air-lock.

Conventionally, rupture disks comprise thin metal disks of various shapes and sizes according to the exact application. Generally stainless steel, nickel alloy, aluminium-teflon, nickel-teflon, aluminium and graphite (for high temperature applications) are used for producing such disks.

The main fracture devices now in use can be classified depending on their intended use/characteristics in a number of types, namely:

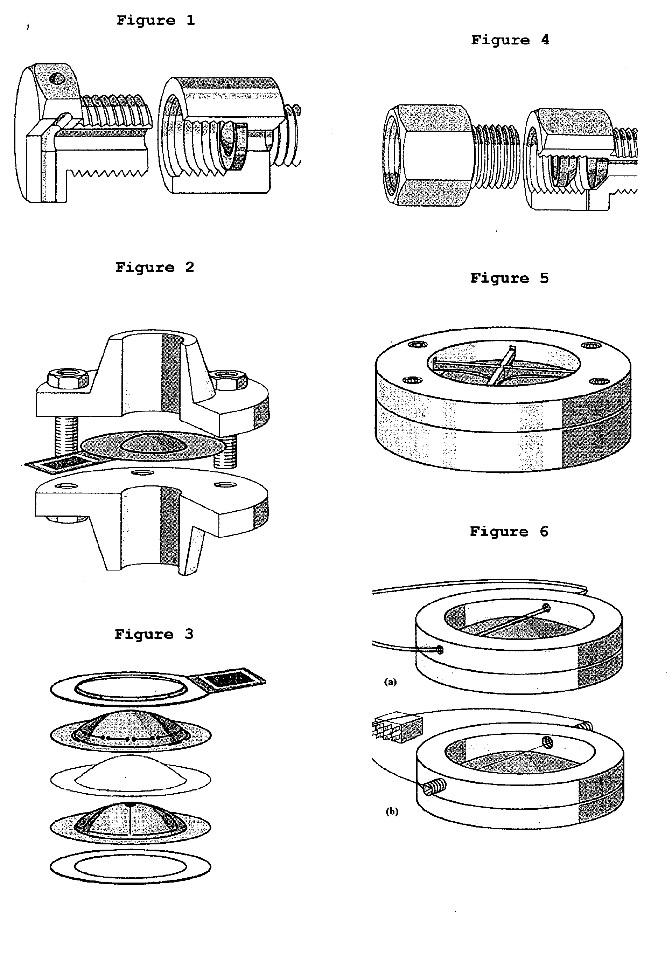

*1. Flanged rupture disks:* they have been used for many years in fire extinguishers, pumps and other pressure systems. Their rupture pressure range is 0.15 to 2.5 MPa (Figure 1).

*2. Standard disks:* they are used in hydraulic plant (pressure conduits and hoses with rapid circulating fluids). With an auxiliary conduit (to replace the disk), they are quite adapted for coping with overpressure due to buffering (Figure 2).

*3. 3-layer rupture disks:* these are used for low rupture pressures. The value of $p_{max}$ is the result of the engraved aluminium cover (Figure 3).

*4. High pressure rupture disks:* the precise value of the rupture pressure (40-700 MPa) depends on the diameter and radius of the pressure cone (Figure 4).

*5. Explosion discharge disks:* these are adapted for use in silos with inflammable powder and large tanks with explosive liquids or gases. The usual rupture pressure range is 0.15-0.30 MPa.

*6. Inversion rupture disks:* unlike the disk types above, these are convex in relation to the side from which pressure is exerted. When the rupture pressure is reached, they invert and break due to a blade fitted at a certain point (Figure 5).

In metal rupture disks the actual rupture pressure is usually $\pm$ 0.25 MPa the rated pressure, with consequent lower reliability.

Failure disk devices are generally fitted with alarms (Figure 6). These supervise safety devices and alarm when the failure disk breaks. Generally there are two types of devices:

■ Closed electrical circuit (standard): this type of device has a cable loop on the failure disk cutting off the power when the disk breaks, and triggering the alarm (Figure 6a).

■ Photo electric cell: this type of device has a led/photodiode below the disk. When the disk breaks the ray of light is cut off, alarming the system (Figure 6b).

To prevent premature alarming,. the working pressure (operating pressure), $p_{op}$, must be set considerably below the rupture pressure, $p_{max}$. Generally $p_{op}$ is set to $0.8p_{max}$. If the stress is variable or the temperature is particularly high $p_{op}$ is set to $0.6p_{max}$.

Conventional rupture disks break without splintering, i.e. without producing shrapnel. This is an advantage since other parts of the machinery or device are protected against damage. The evident disadvantage is the small cross-section of the fluid-carrying hose compared to the diameter of the disk. In many applications it would be better if the disk shattered, leaving the hose cross-section unaltered (and equal to the diameter of the disk). The shattered pieces could be retrieved by suitable devices which would reduce the hose cross-section much less than in conventional metal rupture disks.

US patent No. 6 472 068 discloses glass rupture disks for blocking fluid flow in conduit, pipes or tanks made from pre-stressed glass with controllable rupture properties having a failure resistance lower than 270 MPa.

**Objects and summary of the invention**

The object of the present invention is to provide ESP glass rupture disks with high failure resistance able to shatter into microscopic pieces following the stable growth of the superficial flaws and thereby avoiding undesired obstruction of for use in pressure containers or conduits subject to buffering. Typically, the glass rupture disks of the present invention present a failure resistance higher than 320 MPa.

Another object of the present invention is to provide ESP glass rupture disk having low variability of rupture pressure ($p_{max}$) values, i.e. having a definite and precise $p_{max}$ value.

Another object of the present invention is to provide design criteria for the manufacture of ESP glass rupture disks having a pre-determined fixed failure resistance and pre-defined rupture pressure.

The main advantages of the present invention with respect to the prior art are related to i) the possibility of manufacturing glass rupture disks that present a pre-defined mechanical resistance with a narrow dispersion of the failure data (relative st. dev. of 4%); ii) the possibility of using such disks in critical conditions due to their damage resistance, fatigue insensitivity and high fragmentation capability, thus avoiding the obstruction of the conduit after rupture.

Moreover ESP glass is a valid replacement for metal materials used conventionally in the manufacture of rupture disks in view of the relatively low production costs and insensitivity to the chemical environment.

Also, the design criteria are not sensitive to any limitation on the thickness and diameter of the produced disks.

According to the present invention, these purposes are achieved by means of the claims which follow.

**Brief description of the drawings.**

The present invention will now be described in detail with reference to the attached drawings, which are provided purely by way of non-limiting examples and in which:

- figure 1. Device with flanged failure disk (from the Schlesinger catalogue [3]);
- figure 2. Standard failure disk device (from the Schlesinger catalogue [3]);
- figure 3. 3-layer failure disk (from the Schlesinger catalogue [3]);
- figure 4. High pressure failure disk (from the Schlesinger catalogue [3]);
- figure 5. An inversion failure disk type safety device (from the Schlesinger catalogue [3]);
- figure 6. Alarms (a) standard type (b) photoelectric cell type;
- figure 7. Mechanical resistance of an annealed and ESP glass versus the stress rate in distillate water (dynamic fatigue test on SLS glass bars in 4-point bending 'configuration according to ASTM C158-84 norm);
- figure 8. Mechanical resistance (rupture test on SLS glass bars in 4-point bending configuration according to ASTM C158-84 norm) decay versus the indentation load (Vickers) for a ESP glass;
- figure 9. Schematic of the test configuration used for ASTM F394-78;
- figure 10. Schematic for the "Ball on ring" test;
- figure 11. A secured plate and $k_1$ curve depending on radius;
- figure 12. A supported plate and $k_2$ curve depending on radius;
- figure 13. System to test rupture disks with concentrated load at the centre.(a) assembly schematic. (b) after assembly;
- figure 14. Operating pressure curve for circular glass plates (re-fired and hardened). Taken from the Glass Engineering Handbook[4];
- figure 15. Schematic for rupture disk with supported edge and concentrated load Q, applied at the centre, by means of a ball;
- figure 16. Schematic for rupture disk under pressure with supported edges;
- figure 17. Bench tests for rupture disks. (a) assembly schematic. (b) assembled schematic.

**Detailed description of preferred embodiments of the invention.**

The composition of soda-lime float glass plates employed for the manufacture of engineered stress profile (ESP) glass and consequently of ESP glass rupture disks is a fundamental parameter for the residual stress profile definition. Therefore, the use of soda-lime float glasses of different compositions makes it possible to obtain different mechanical performances using the same thermo-chemical treatment. On the other side, the use of different thermo-chemical treatments (characterized by different process times and temperatures) makes it possible to manufacture ESP glass rupture disks characterized by different values of mechanical resistance.

The arrangement described herein being directed to provide design criteria for the manufacture of an ESP glass rupture disk with a pre-determinate mechanical resistance exemplifies how acting on parameters like temperature and time of the thermo-chemical treatment and on the composition and thickness of the starting glass is possible to manufacture rupture disks having pre-defined operative and rupture pressures.

The composition of the starting soda-lime float glass used in the present application is reported in Table 1.

The compounds constituting the soda-lime float glass able to influence the mechanical characteristics of the ESP glass rupture disk manufactured therefrom are the amount of $Na_2O$, CaO and MgO are reported in Table 1. Specifically, Table 1 shows the chemical composition (wt %) of the starting glass used in the arrangement disclosed herein in comparison with the compositions disclosed in US-A-6 472 068 and US-A-6 516 634.

Table 1.

| starting glass | %$SiO_2$ | %$K_2O$ | %$Na_2O$ | %CaO | %MgO | %$Al_2O_3$ | %$Fe_2O_3$ | other |
|---|---|---|---|---|---|---|---|---|
| Present invention | 71.7 | 0.8 | 10.9 | 11.8 | 3.2 | 1.1 | 0.2 | 0.3 |
| US-A-6 472 068 | 62÷73 | 0÷4 | 12÷15 | 0.3÷10 | 0÷3 | 0÷17 | 0÷0.2 | ... |
| US-A-6 516 634 | 71 | ...* | 13 | 10 | 4 | 1 | ...* | ... |

* wt % lower than 1%

The ESP glass rupture disks produced starting from a soda-lime float glass having the composition reported in table 1 and according to the process described in US 6 516 634 present a failure resistance greater than 320 MPa and up to 430 MPa depending on the considered disk thickness. Specifically, it has been established that for manufacturing rupture disks with failure resistance greater than 320 MPa, the amount of $Na_2O$, CaO and MgO must be lower than 12% in weight and greater than 10% and 3% in weight, respectively.

The ESP glass rupture disks manufactured according to the arrangement disclosed herein tested in a biaxial flexure configuration, show higher module of rupture (MOR) than conventional annealed glass and glass undergoing single ion-exchange treatment. The key feature in this new approach is to carefully design the residual stress profile in such a way as to move the maximum compression away from the external surface and to carefully control the stress gradient in the surface region. As this approach involved the 'Engineering' of the Stress Profile, these glasses have been named ESP glasses.

The coefficient of variability (COV) of mechanical strength for ESP glass rupture disks according to the arrangement disclosed herein is less than 4%, against 20% for single ion-exchanged glass or annealed glass rupture disks.

Such mechanical characteristics are the result of the stable growth of surface flaws in ESP glass due to the particular apparent fracture toughness curve related to the residual-stress profile.

A direct consequence of the stable growth is the presence of surface microcracking leading to the shattering of the ESP material upon rupture. Such behaviour makes the use of the ESP glass possible in applications requiring a high rupture value, excellent reliability and fine fragmentation. These features, coupled to almost total fatigue insensitivity, make it suitable for many safety applications incorporating rupture disks.

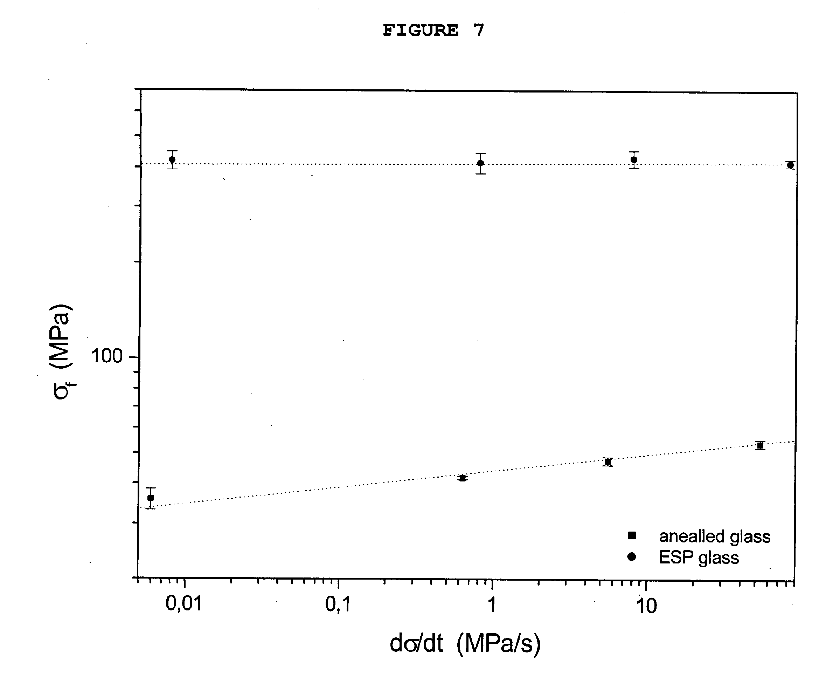

The diagram of figure 7 shows the failure resistance versus the stress rate for a 4-point bending test conduced in aggressive environment (dynamic fatigue test). It is evident that the ESP glass resistance does not change for all the considered stress rate values. In the case of the annealed glass the mechanical performance is instead strongly dependent on the stress rate.

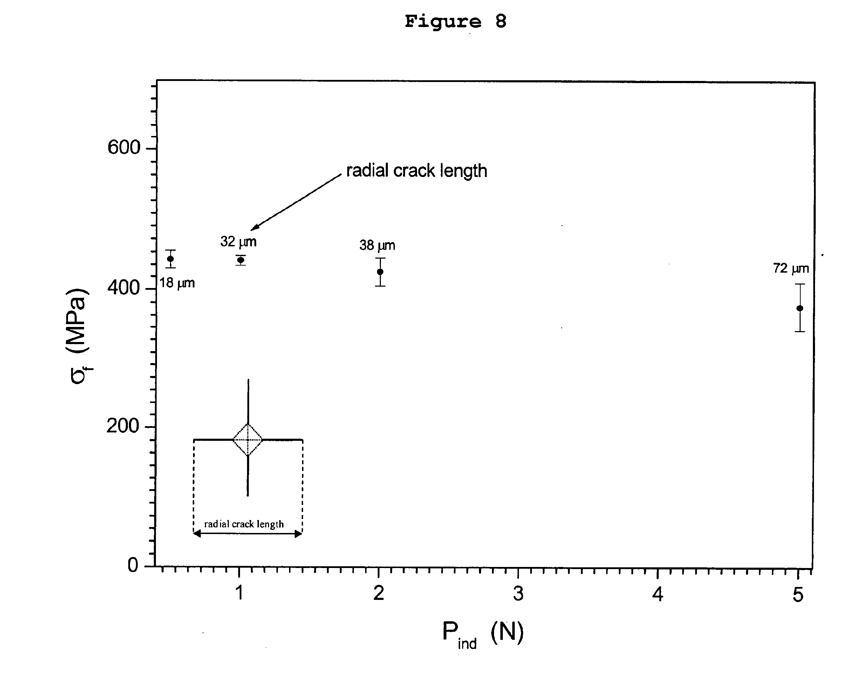

As regards damage resistance, figure 8 shows that the failure resistance of the ESP glass is insensitive to the size of Vickers indentation defects, at least up to a load of 5 N. This behaviour has not been observed for annealed glass [5].

The design criteria for ESP glass rupture disks proposed herein allow to manufacture rupture disks with definite rupture pressure as a function of parameters like thickness, diameter and mechanical resistance.

The proposed criteria do not assume any limitations on the thickness and diameter values providing that the ratio d/t is greater than 5, according to the condition of the applicability of equation 32. Conversely, in US-A-6 472 068 an operative range of 1.78÷3.18 mm for the thickness and 12.7÷38.1 mm for the diameter are required.

With a ratio d/t greater than 5, the range of rupture pressures (at the verification stage) is between 3 MPa and 30 MPa (30-300 atm).

MECHANICAL FEATURES OF ESP GLASS DISKS

Production of ESP glass disks

The start-off material was Planilux® glass (a sheet of clear soda-lime-silica glass manufactured by Saint Gobain). The disks (produced by grinding wheel with diamond cutter) have a diameter of 33mm and thickness of 2 and 4 mm. The chemical composition of the glass is shown in Table 1, and elastic constants and glass transition temperature [6] in Table 2.

Table 2 below reports the elastic constants and transition temperature $T_g$ of the glass. The Young Module was measured by acoustic resonance, and transition temperature by DSC test (according to ASTM E1346-91 norm).

Table 2.

| Planilux® glass properties | |
|---|---|
| Young Module, E (GPa) | $71.4 \pm 1.0$ |
| Poisson ratio, ν | 0.22 |
| Glass transition temperature, $T_g$ (°C) | 565 |

Given the special configuration used for the biaxial flexure test of the disks (the main characteristic of ASTM F394-78 is the insensitivity to edge flaws), it is not necessary to avoid edge flaws.

The disks are annealed for 10 hours, in static air, at 510°C, to remove any residual stress introduced during manufacture. Annealing was performed by heat gradient of 245°C/h and cooling by a gradient of about 40°C/h.

The ion-exchange process takes place in a semiautomatic furnace (model TC 20 A, Lema, Parma - Italy), used simultaneously for about 30 samples. The samples are placed in a stainless steel basket over a bath of fused salt of about 5 litres. The kiln is fitted with a device to keep the basket in position over the bath for a period of pre-heating of 25 minutes, before being plunged into the bath. After the ion-exchange process the basket is lifted out of the bath and cooled inside the kiln for a period of 25 minutes.

The annealed disks were treated initially with pure $KNO_3$ at 450°C for 48 hours. This process generates a residual-stress profile with maximum surface compression.

Subsequently the samples undergo a partial relaxation of stress by ion-exchange in a bath of 70% mol $KNO_3$ and 30% mol $NaNO_3$, at 400°C for 30 minutes.

The second treatment, as it will be described below, gives rise to a residual-stress with the maximum compressive stress at some distance from the surface.

The different labels depend on different thicknesses and treatments of the samples:

- Samples Y2d_tq : disks with nominal thickness 2 mm, annealed at 510°C for 10h
- Samples Y2d_1t : disks with nominal thickness 2 mm, annealed at 510°C for 10h and subjected to single ion-exchange in $KNO_3$ at 450°C for 48h
- Samples Y2d_2t : disks with nominal thickness 2 mm, annealed at 510°C for 10h and subjected to ESP treatment (ion-exchange in $KNO_3$ at 450°C for 48h + second ion-exchange in $KNO_3/NaNO_3$ 70/30% mol at 400°C for 30 minutes)
- Samples Y4d_tq : disks with nominal thickness 4 mm, annealed a 510°C per 10h
- Samples Y4d_1t : disks with nominal thickness 2 mm, annealed a 510°C per 10h and subjected to single ion-exchange in $KNO_3$ at 450°C for 48h
- Samples Y4d_2t : disks with nominal thickness 4 mm, annealed at 510°C for 10h and subjected to ESP treatment (ion-exchange in $KNO_3$ at 450°C for 48h + second ion-exchange in $KNO_3/NaNO_3$ 70/30% mol at 400°C for 30 minutes)

Table 3 clearly illustrates the correlation between the disk rupture disk label and its manufacturing conditions.

Table 3.

| Samples | Annealed | Single ion-exchange | ESP treatment |
|---|---|---|---|
| Y2d tq | X | | |
| Y2d 1t | X | X | |

Table 3.   (continued)

| Samples | Annealed | Single ion-exchange | ESP treatment |
|---|---|---|---|
| Y2d 2t | X | X | X |
| Y4d tq | X | | |
| Y4d 1t | X | X | |
| Y4d 2t | X | X | X |

The following tests were carried out on the ESP disk samples to establish their mechanical properties:

- ■    Determination of residual-stress profile and apparent fracture toughness induced by the ESP process.
- ■    Determination of mechanical strength (or module of rupture, MOR); biaxial flexure tests in an inert environment.
- ■    Determination of sensitivity to fatigue, n, and critical velocity, $v_0$, in distilled water.

These mechanical features are then used to design the rupture disks.

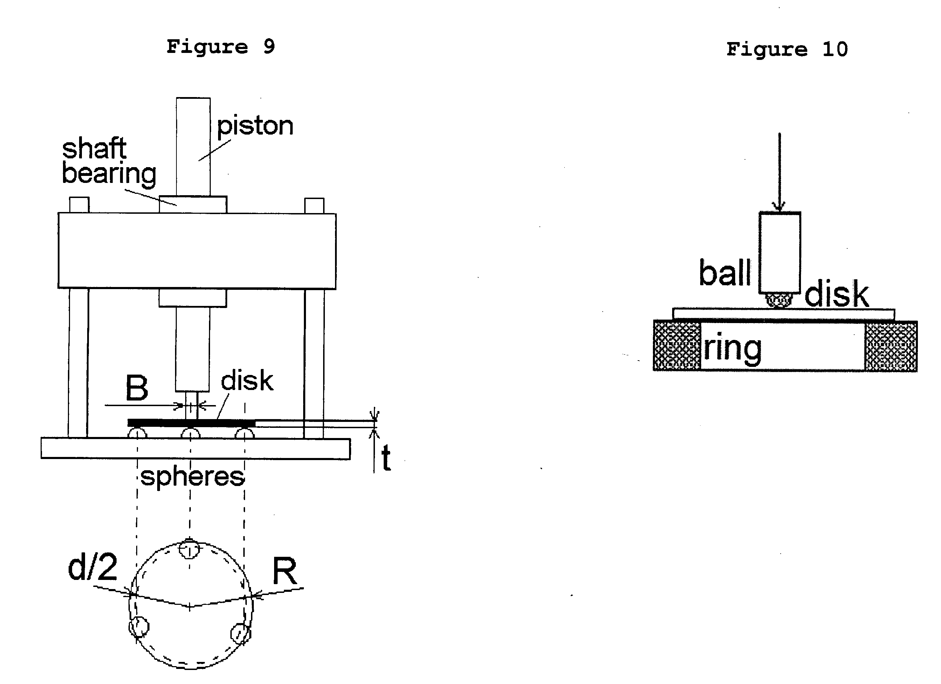

The disks are tested for mechanical strength determination by the "piston on 3 balls" configuration (biaxial flexure), according to ASTM F394-78 norm, in silicone oil (figure 9).

The module of rupture, MOR, derived from biaxial flexure[7] is expressed by the equation 1.

$$MOR = \sigma_f = \frac{3P_{max}(X\text{-}Y)}{4\pi t^2} = \frac{0.2387 P_{max}(X\text{-}Y)}{t^2} \qquad \text{Equation 1}$$

The expressions of X and Y are as follows:

$$X = (1+v)\ln(\frac{B}{R})^2 + [(\frac{1\text{-}v}{2})](\frac{B}{R})^2 \qquad Y = (1+v)[1+\ln(\frac{t}{2R})^2] + (1\text{-}v)(\frac{t}{2R})^2$$

where $P_{max}$ (in N) is the rupture load, d (in mm) the diameter of the support (for the 3 balls), B (in mm) the piston radius, R (in mm) the radius of the glass disk and t (in mm) its thickness.

To reduce the negative effect of any misalignment of the piston with respect to the disk surface, a rubber pad of thickness about 1 mm is placed between the piston and disk.

For dynamic fatigue tests we exploited the configuration used for mechanical strength tests in an inert environment. The test was carried out in distilled water, using different load speed.

The crack velocity law's exponent (n) is determined by the slope, m, of the line interpolating the experimental points of the relation $\log\sigma_f$ vs. $\log(dc/dt)$ [8] :

$$n = 1/m\text{-}1. \qquad \text{Equation 2}$$

The parameter $v_0$ is calculated from the value, A (corresponding to the intercept point on the abscissas for a value of stress rate equal to zero), of the line interpolating the experimental points:

$$v_0 = \frac{2c_0(n+1)\sigma_0^n}{10^{A(n+1)}(n\text{-}2)} \qquad \text{Equation 3}$$

where $c_0$ is the average initial dimension of the surface flaws.

By using a typical statistical procedure it is also possible to calculate the error for the two parameters n and $v_0$.

MECHANICAL CHARACTERIZATION OF ESP GLASS DISKS

Residual-stress profile and apparent fracture toughness

The residual-stress profile and apparent fracture toughness of glass disks subjected to ion-exchange (pure

$KNO_3$ for 48 hours at 450°C, Y4d_1t) and ESP disks (double ion-exchange: 48 hours in $KNO_3$ at 450°C and 30 minutes in a bath of 30/70% mol $NaNO_3$/ $KNO_3$ at 400°C, Y2d_2t; double ion-exchange: 48 hours in $KNO_3$ at 450°C and 30 minutes in a bath of 30/70% mol $NaNO_3$/ $KNO_3$ at 400°C, Y4d_2t) are calculated from the average of 2-3 profile measurements for each set of samples.

Despite the maximum compression below the surface, single ion-exchange, i.e. Y4d_1t, is not able to promote stable growth of surface flaws. Conversely, ESP treatment gives rise to stable growth of surface flaws. Table 4 below summarises the maximum values of the residual-stress profile, the range of stable growth and the predicted mechanical strength and apparent fracture toughness curves determined on the basis of ESP theory for single ion-exchange glass disks and ESP glass disks.

Table 4.

| sample | max. compression | theoretical range of stable growth ($\mu$m) | theoretical rupture value (MPa) |
|---|---|---|---|
| Y4d 1t | 420 MPa at 9 $\mu$m | absent | ** |
| Y2d 2t | 569 MPa at 8 $\mu$m | 0.4-10 | 505 |
| Y4d 2t | 526 MPa at 9 $\mu$m | 0.4-11 | 469 |

Mechanical strength

As stated above, mechanical strength values were obtained from ASTM F394-78 tests in silicone oil.

The module of rupture (MOR, $\sigma_f$) was calculated for each set of samples (average mechanical strength of individual samples), with standard deviation (st. dev.) and COV, coefficient of variation, expressed by equation 4:

$$COV = st.\ dev./MOR \qquad\qquad Equation\ 4$$

Table 5 shows the MOR for disks (tested by "piston on three balls" configuration) obtained by using an actuator speed of 5mm/min in an inert environment.

Table 5.

| sample | MOR (MPa) | $\pm$st. dev. (MPa) | COV % |
|---|---|---|---|
| Y2d tq | 196 | 49 | 25.0 |
| Y4d tq | 192 | 53 | 27.0 |
| Y2d 2t | 319 | 10 | 3.3 |
| Y4d 2t | 266 | 10 | 3.8 |

The low COV found in ESP samples is due to the stable growth of surface flaws; this was observed with loads of up to 80% of the rupture load. When placed in traction, the ESP glass surface showed microscopic cracks ("microcracking effect"), confirming the stable growth of flaws.

Fatigue behaviour

Sensitivity to fatigue, n, and the critical velocity, $v_0$, values are calculated using the previous test configuration in distilled water.

As stated above, the two parameters determine the influence of sub-critical growth in the linear area governed by the power law. High values of n and low values of $v_0$ identify a material not affected by fatigue phenomenon.

Table 6 shows sub-critical stress data for examined glasses. ESP samples are insensitive to sub-critical crack growth.

Table 6.

| sample | n | $v_0$ ($\mu$m/s) |
|---|---|---|
| Y4d tq | 25.5 $\pm$2.7 | 780 $\pm$ 460 |

Table 6.   (continued)

| sample | n | $\nu_0$ ($\mu$m/s) |
|---|---|---|
| Y2d 2t | $42.2 \pm 4.5$ | $0.37 \pm 0.016$ |
| Y4d 2t | $47.1 \pm 11.5$ | $4.1 \pm 0.97$ |

The MOR for of 4mm ESP disks is lower than for 2mm ESP disks, despite similar residual-stress profiles. This is not a surprisingly result, given that ASTM F394-78 regulations specify thickness restrictions for samples used on the basis of Equation 1.

The conditions[9,10] for the validity of the Kirstein and Wolley method are:

- maximum deflection of the disk less than one half the thickness;
- the radius of the circumference containing the balls must be over four times the thickness.

This means that the thickness of tested disks is between 0.2 and 3 mm; in the case of Y4d disks the requirement is not met.

To overcome this problem, MOR is calculated using the "ball on ring" configuration. Such configuration, unlike "Piston on three balls", uses a ring and ball of known radius, instead of a piston (figure 10).

This configuration is valid for equation 1 with thickness of over 4 mm. The only drawback is the estimate of the load area, which - according to Hertz theory - is about 1/3 of the thickness[9].

Table 7 shows MOR values determined in air for disks tested by "ball on ring", at an actuator speed of 5 mm/ min.

Table 7.

| sample | MOR (MPa) | $\pm$st. dev. (MPa) | COV (%) |
|---|---|---|---|
| Y2d 1t | 597 | 65 | 11 |
| Y4d 1t | 565 | 77 | 14 |
| Y2d 2t | 320 | 11 | 3.4 |
| Y4d 2t | 430 | 16 | 3.6 |

For the purpose of the investigation the "ball on ring" configuration is more suitable than "piston on three balls" for two basic reasons:

- the Kirstein and Wolley formula for maximum stress remains valid for all thicknesses (as can be seen below in relation to FEM simulations),
- the distribution of loads and restrictions is a proper reflection of the rupture disk under pressure, as investigated by this study.

The reasons for choosing ESP rupture disks rather than annealed glass or glass with single ion-exchange are as follows:

- compared to the other two types of glass, ESP glass has a low COV: this means a highly reliable rupture pressure,
- the high value of n means that the glass is virtually insensitive to fatigue phenomenon,
- the particularly fine fragmentation of ESP glass, after rupture, means that the glass can be used

  where this feature is a definite requirement (as it is the case with rupture disks).

DESIGN CRITERIA FOR THE MANUFACTURE OF ESP GLASS RUPTURE DISKS

The aim of this section is to establish design criteria for the manufacture of rupture disks made by ESP glass.

From the analytical point of view, a circular plate subject to uniform surface pressure will be considered.

Leaving aside the design criteria for the moment, let us first look at one of the factors in play when deciding the dimensions of the disk: mechanical strength, $\sigma_f$ (MOR).

Conventionally, the features of ESP glass have been established on the basis of two tests: monoaxial flexure tests (on bars) and biaxial flexure tests (on disks).

Mechanical strength measured by monoaxial flexure (with "4-point bending" configuration) is lower than the value observed for biaxial flexure (with "Piston on 3 balls" configuration).

This is basically due to the critical nature of the edge flaws in the former case; in biaxial tests this disadvantage is by-passed by the particular configuration of the sample.

Therefore the problem arises as to which $\sigma_f$ must be used. The configuration of the inflected plate under uniform load is similar, in geometrical terms and for the load application, to the biaxial configuration considered here ("Piston on 3 balls", or, better still, "Ball on ring"); we will therefore use the mechanical strength found in the two biaxial configurations as $\sigma_f$ (MOR) .

This is the starting point for establishing design criteria for rupture disks.

Before going on to the strictly design phase, let us look at how the literature deals with the problem of inflected plates under uniform load.

The Poisson model for circular inflected plates

Consider a circular plate subjected to an axially symmetrical load, p, uniformly distributed. It is reasonable to refer the surface to polar coordinate $\rho,\theta$ measuring the inflection, w, on the z axis.
The problem is dealt with in the differential equation of Lagrange:

$$C(\frac{\delta^4 w}{\delta x^4} + 2\frac{\delta^4 w}{\delta x^2 \delta y^2} + \frac{\delta^4 w}{\delta z^4})- p = 0 \qquad \text{Equation 5}$$

where C is a proportional constant.

There are a number of theories in this field; the most useful here is the theory of Poisson. The correct form of equation 5 is as follows:

$$(\frac{\delta^4 w}{\delta x^4} + \frac{\delta^4 w}{\delta x^2 \delta y^2} + \frac{\delta^4 w}{\delta z^4}) = \frac{p}{D} \qquad \text{Equation 6}$$

D is the flexional rigidity which, on the basis of the hypothesis of Kirchhoff, for a plate with Young modulus, E, and thickness t, is:

$$D=\frac{1}{12}\frac{Et^3}{(1-\nu^2)} \qquad \text{Equation 7}$$

where:

t = constant thickness of the plate;
$\nu$ = Poisson ratio;
E = Young modulus;
p = uniform applied pressure;

Equation 5 is justified by applying the mechanical balance of the elementary sector. For reasons of symmetry, there is no shear load on the radial faces but only on the circumference faces.

For the plate, the shear T and moments $M_\rho$, $M_\theta$ are referred to units of lengths, the rotation balance yields:

$$-M_\rho \rho d\theta +(M_\rho + \frac{dM_\rho}{d\rho}d\rho)(\rho+d\rho)d\theta-2M_\theta sen\frac{d\theta}{2}d\rho+T\rho d\theta d\rho = 0 \qquad \text{Equation 8}$$

and therefore:

$$\rho\frac{dM_\rho}{d\rho} + M_\rho -M_\theta+T_\rho=0 \qquad \text{Equation 9}$$

Before going on, the moments should be linked to the displacements w. For symmetry, the displacement is irrespective of the variable $\theta$, thus $w=w(\rho)$.

And hence:

$$\varphi \approx -\frac{dw}{d\rho} \qquad \text{Equation 10}$$

and the radius, $r_\rho$ , of curvature in the $\rho z$ plane:

$$\frac{1}{r_\rho} \approx \frac{d\varphi}{d\rho} = \frac{-d^2 w}{d\rho^2} \qquad \text{Equation 11}$$

The curvature which is manifested perpendicularly to the plane $\rho z$ is linked to the radius $r_\theta$ by equation 12.

$$r_\theta \approx \frac{\rho}{\varphi} \qquad \text{Equation 12}$$

The curvatures $1/r_\rho$ , $1/r_\theta$ are linked to the radial linear and circumferential deformations $\varepsilon_{\rho\rho}$ , $\varepsilon_{\theta\theta}$ by:

$$\varepsilon_{\rho\rho} = \frac{z}{r_\rho} \qquad \varepsilon_{\theta\theta} = \frac{z}{r_\theta} \qquad \text{Equations 13}$$

with corresponding tensions:

$$\sigma_{\rho\rho} = \frac{Ez}{1-v^2}(\frac{1}{r_\rho} + v\frac{1}{r_\theta}) \qquad \sigma_{\theta\theta} = \frac{Ez}{1-v^2}(\frac{1}{r_\theta} + v\frac{1}{r_\rho}) \qquad \text{Equations 14}$$

and flexure moments $M_\rho$ and $M_\theta$ per unit length, referring to cross-sections of the circumference and the radius, respectively:

$$M_\rho = \int_{-t/2}^{t/2} \sigma_{\rho\rho}\,zdz = D(\frac{1}{r_\rho} + v\frac{1}{r_\theta}) \qquad\qquad M_\theta = \int_{-t/2}^{t/2} \sigma_{\theta\theta}\,zdz = D(\frac{1}{r_\theta} + v\frac{1}{r_\rho})$$

$$\textbf{Equations 15}$$

Hence, on the basis of equations 13 and 14, equations 15 can be rewritten as:

$$M_\rho = -D(\frac{\delta^2 w}{\delta\rho^2} + \frac{v}{\rho}\frac{\delta w}{\delta\rho}) \qquad M_\theta = -D(v\frac{\delta^2 w}{\delta\rho^2} + \frac{1}{\rho}\frac{\delta w}{\delta\rho}) \qquad \text{Equations 16}$$

and by replacing equation 16 in 9, the following is obtained:

$$\frac{d^3 w}{d\rho^3} + \frac{1}{\rho}\frac{d^2 w}{d\rho^2} - \frac{1}{\rho^2}\frac{dw}{d\rho} = -\frac{T}{D} \qquad \text{Equation 17}$$

or, in compact form:

$$\frac{d}{d\rho}\left[\frac{1}{\rho}\frac{d}{d\rho}\left(\rho\frac{dw}{d\rho}\right)\right] = -\frac{T}{D} \qquad\qquad \textbf{Equation 18}$$

If, as in our case, the pressure p is constant:

$$T=\frac{p\rho}{2}$$

Equation 19

by direct integration of equation 18 we obtain:

$$\frac{1}{\rho}\frac{d}{d\rho}(\rho\frac{dw}{d\rho}) = \frac{p\rho^2}{4D} + c_1$$

Equation 20

and:

$$\frac{dw}{d\rho} = \frac{p\rho^3}{16D} + c_1\frac{\rho}{2} + c_2\frac{1}{\rho} \qquad w(\rho)=\frac{p\rho^4}{64D} + c_1\frac{\rho^2}{4} + c_2 \ln\frac{2\rho}{d} + c_0$$

Equations 21

where d is the diameter of the plate support.

These equations also describe the profile conditions. Since p=0 and dw/dp=0 (conditions I), then $c_2$=0. The other constants can be found by considering the way the plate is secured or supported.

If the plate is fixed at the edge, conditions I, then $c_1$=-pd$^2$/32D and $c_0$=pd$^4$/1024D, and therefore:

$$w(\rho)=\frac{1}{64} \frac{p}{D}(\frac{d^2}{4} - \rho^2)^2$$

Equation 22

$$M_\rho(\rho) = \frac{p}{16}\left[\frac{d^2}{4}(1+\nu) - \rho^2(3+\nu)\right]$$

Equation 23

In this case the maximum tension occurs on the border, i.e.:

$$\sigma_{\rho\rho}\ (\rho = \frac{d}{2}) = \frac{6|M_{\rho(\rho=d/2)}|}{t^2} = \frac{3}{16}\frac{pd^2}{t^2}$$

Equation 24

If, on the other hand, the plate is supported at the edge, conditions II apply:

$$w=0 \qquad \frac{d^2w}{d\rho^2} + \frac{\nu}{\rho}\frac{dw}{d\rho}=0$$

and equation 21 b becomes:

$$w(\rho) = \frac{1}{64}\frac{p}{D}(\frac{d^2}{4} - \rho^2)\left[\frac{5+\nu}{1+\nu}\frac{d^2}{4} - \rho^2\right]$$

Equation 25

$$M_\rho(\rho) = \frac{1}{16}p(3+\nu)(\frac{d^2}{4} - \rho^2)$$

Equation 26

In this case the maximum tension occurs at the centre, i.e.:

$$\sigma_{\theta\theta}(\rho=0)=\sigma_{\rho\rho}(\rho=0)=\frac{6M_{\rho(\rho=0)}}{t^2} = \frac{3}{32}(3+\nu)\frac{pd^2}{t^2} \qquad \text{Equation 27}$$

Support/fixing of the plate

On the basis of the theory developed by Poisson, it is assumed that a rupture disk is similar to a circular plate fixed at the edges (by gasket O-rings) and is subjected to a uniform load. The problem is now to consider whether the disk in the gasket flange should be considered secured, supported or held weakly.

Glass is brittle thus we can assume the plate breaks under pressure p when one of $\sigma_{\rho\rho}, \sigma_{\theta\theta}$ is equal to $\sigma_f$ as determined by biaxial flexure tests.

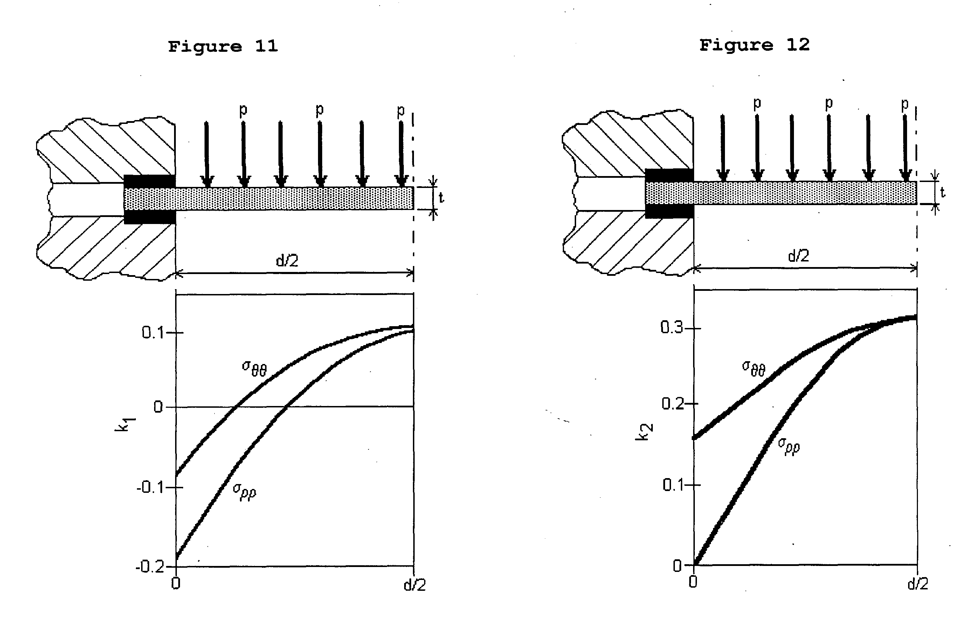

If the disk is secured (Figure 11), the value of $\sigma_{\rho\rho}$ is larger close to the edge, i.e.:

$$\sigma_{\rho\rho}{}^{max} =k_1\left(\frac{d}{t}\right)^2 p \qquad \text{Equation 28}$$

where:

d = disk support diameter;
t = disk thickness;
$k_1$ = stress factor $k_1$=0.1875 close to the edge.

One must remember that d is the diameter of the disk support; the disk has a diameter of 2R, just a little larger than d.

If the disk is supported (Figure 12), the value of $\sigma_{\rho\rho}$, $\sigma_{\theta\theta}$ is larger at the centre, i.e.:

$$\sigma_{\theta\theta}{}^{max} =\sigma_{\rho\rho}{}^{max} = k_2\left(\frac{d}{t}\right)^2 p \qquad \text{Equation 29}$$

where:

d = disk support diameter;
t = disk thickness;
$k_2$ = stress factor $k_2$=0.3025 at the disk centre.

As it will be shown below, there is a distribution parallelism between the forces acting on a disk under pressure and a disk loaded at the centre with a concentrated force.

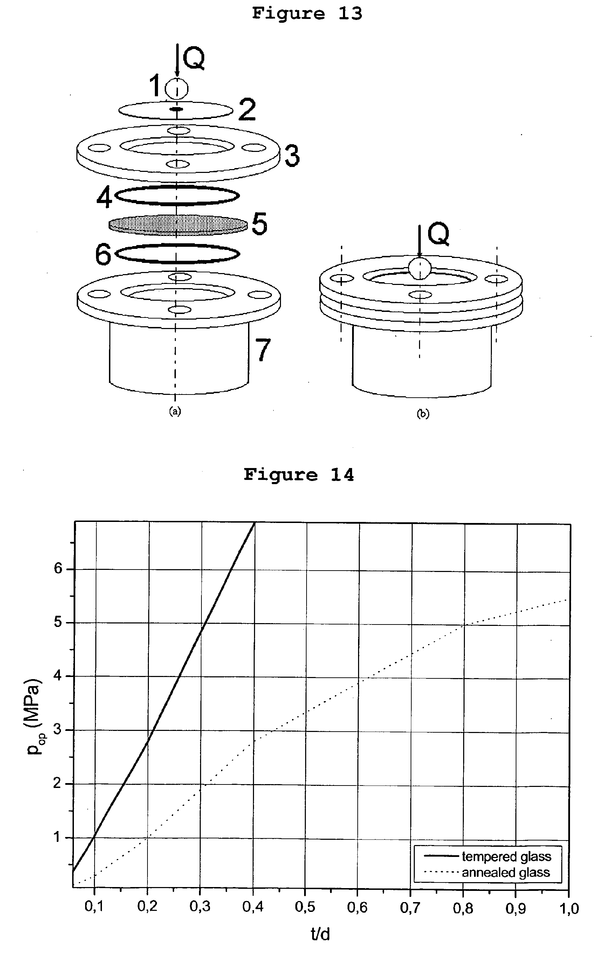

Numerous preliminary rupture tests were carried out on annealed and ESP glass, using the system shown in Figure 13, wherein:

- Support flange (3,7) tightened by nuts,
- Rupture disk (5),
- O-ring (4,6),
- Rubber disk for the placement of the ball (2),
- Stainless steel ball (1).

By analysing the fracture mode and rupture loads, the disk assembled on two flanges with O-rings can be considered to be supported at the edges.

The use of flanges (with O-rings) is equivalent to supporting the disk, so the formula for design purposes is as set out below.

Design criteria

It is likely that disk failure occurs when the maximum radial and circumferential tensile stress (which are equal at the centre of the plate) reach the rupture value $\sigma_{f,biax}$ (derived from biaxial configurations).

$$\sigma_{\rho\rho}{}^{max} = \sigma_{f,biax} = \sigma_{\theta\theta}{}^{max} \qquad \text{Equation 30}$$

The rupture pressure of the disk ($p_{max}$) is obtained by replacing 30 in 29:

$$p_{max} = \frac{\sigma_{f,biax}}{k_2}\left(\frac{t}{d}\right)^2 \qquad \text{Equation 31}$$

The ESP glass disk may be subjected to constant operating pressure ($p_{op}$) as shown[4] in Figure 14 (tempered glass). It breaks - with a fine fragmentation - for an increase of pressure to $\Delta p = p_{max} - p_{op}$.
There are two main parameters to be considered:

■ mechanical strength, $\sigma_{f,biax}$
■ geometrical ratio, t/d

There are two possible assembly configurations for rupture disks depending on whether the safety device is designed for high or low pressure systems.
In both cases the disk size is calculated by using equation 31 with $k_2 = 0.3025$:

$$p_{max} = 3.30\,\sigma_{f,biax}\left(\frac{t}{d}\right)^2 \qquad \text{Equation 32}$$

In order to properly apply the proposed design criteria it is necessary not to confuse the disk support diameter (the O-ring in this case), d, with the glass disk diameter, 2R.
Figure 14 should then be used to make sure the t/d ratio, derived for $p_{max}$, is sufficient for safety at $p_{op}$ operating regimens.

Example

Suppose that we have a conduit carrying steam at a pressure of 2 atm (0.2 MPa) and we need to design an ESP glass rupture disk (let us say with $\sigma_{f,biax} = 350\pm15$ MPa) with $p_{max}$ of 25 atm (2.5 MPa) starting from a plate with nominal thickness of 2 mm (t=1.58 mm).
We can now draw the graph of equation 32 on the basis of $p_{max}$ and d. With $p_{max}$ of 2.5 MPa d = 34 mm. Considering the standard deviation (15 MPa) of $\sigma_{f,biax}$ the diameter can be calculated to an accuracy of $\pm1$ mm, equivalent to a pressure accuracy of $\pm0.15$ MPa.
It should then be verified that the operating pressure of the system is less than or equal to the limit pressure (shown in Figure 14).
From Figure 14, related to tempered glass and a t/d ratio of 0.046, the limit pressure is about 0.7 MPa: above the operating pressure of 0.2 MPa for the system.
This further protects the system against other cases of failure. For a correct manufacture of this device a glass disk diameter, 2R, just slightly greater than the O-ring (support) diameter, d, should be used.

Simulation by Finite Elements Method (FEM)

To check the design criteria, the rupture disks should be tested on a high pressure test bench[1]. Due to the high pressures involved (up to 300 MPa) a simulation is used with test conditions that are different from the operating conditions of the disk supported at the edges but with similar stress field distribution.
Let us look at the following situations:

■ Disk under pressure, with supported edge:

As stated before:

$$\sigma_{\theta\theta}(\rho=0) = \sigma_{\rho\rho}(\rho=0) = \frac{3}{32}(3+\nu)\frac{pd^2}{t^2} \qquad \text{Equation 33}$$

the maximum tensile stress occurs close to the centre of the disk.

■  Disk with concentrated load, Q, at the centre, with supported edge:

This configuration is difficult to be achieved due to the difficulty of applying the load at the precise central point. Simpler is the case of a load applied by means of a steel ball.

This situation is comparable to the "Ball on ring test" and therefore the maximum tensile stress at the centre is calculated by Kirstein and Wolley[7] as follows:

$$\sigma_{max}(\rho=0) = \frac{3Q(1+\nu)}{4\pi t^2}\left[1 + 2\ln\frac{d}{2b} + \frac{1-\nu}{1+\nu}\left(1-\frac{2b^2}{d^2}\right)\frac{d^2}{4R^2}\right] \quad \text{Equation 34}$$

where:

Q= applied load
t= thickness of the plate
d= ring diameter
b= radius of the ball/disk contact area
R= disk radius

To estimate the contact area, b, Kirstein and Wolley use a b* value (instead of b in equation 34) equal to t/3. On the basis of the obtained results, the tension at the centre of the disks in the two situations is the same if, and only if:

$$\frac{3Q(1+\nu)}{4\pi t^2}\left[1 + 2\ln\frac{d}{2b} + \frac{1-\nu}{1+\nu}\left(1-\frac{2b^2}{d^2}\right)\frac{d^2}{4R^2}\right] = \frac{3}{32}(3+\nu)\frac{pd^2}{t^2} \quad \text{Equation 35}$$

giving the ratio between applied pressure, p, and load, Q, simulating the maximum stress and hence the rupture of the disk.

$$p = \frac{8(1+\nu)}{\pi(3+\nu)d^2}\left[1 + 2\ln\frac{d}{2b} + \frac{1-\nu}{1+\nu}\left(1-\frac{2b^2}{d^2}\right)\frac{d^2}{4R^2}\right]Q = K(d,R,t)Q$$

$$\text{Equation 36}$$

where K is a parameter depending on d, R and t.

This similarity, expressed by equation 36, is confirmed a FEM (Finite Element Method) simulation performed by Ansys© program.

The first case includes comparison between the results according to equation 36 and the simulation, for a disk with the following features:

E= 71.4 GPa, ν= 0.22
2R=30 mm, d= 27 mm, t=1.5 mm, b*=t/3=0.5mm

FEM simulation shows:

$$p=0.0101Q \quad\quad \text{Equation 37}$$

and equation 36:

$$p=0.0107Q \qquad \text{Equation 38}$$

with Q in N and p in MPa.

The second case includes the comparison between the results obtained according to equation 36 and the simulation, for a disk with the following features:

E= 71.4 GPa, $\nu$= 0.22
2R=30 mm, d= 27 mm, t=3.8 mm, b*=t/3=1.27mm
    FEM simulation shows:

$$p=0.0083Q \qquad \text{Equation 39}$$

and equation 36:

$$p=0.0083Q \qquad \text{Equation 40}$$

with Q in N and p in MPa.

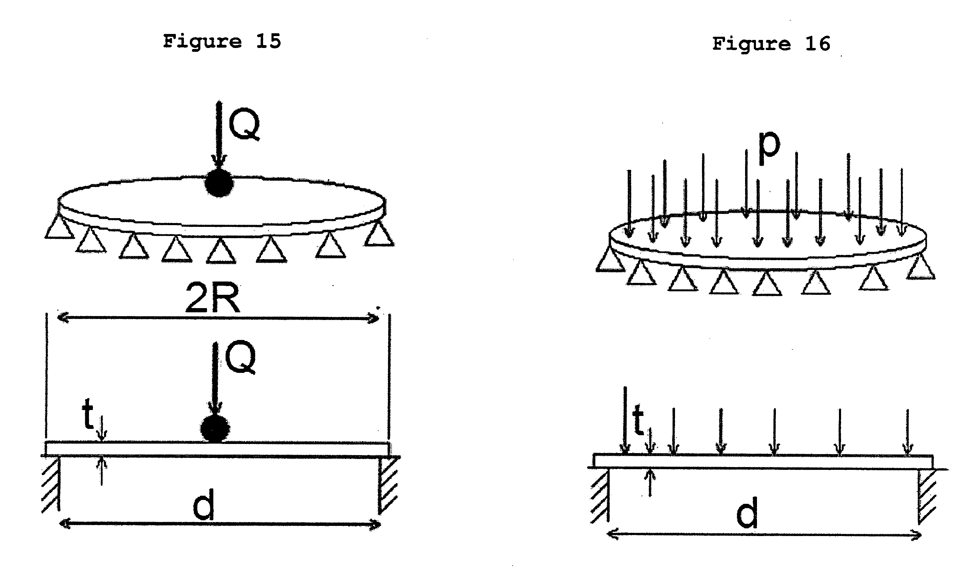

These results show that it is possible to use the configuration of Figure 15 to find the load Q which, in terms of rupture, simulates the pressure p of the configuration of Figure 16 (rupture disk under pressure between two flanges with O-rings) .

Experimental verification

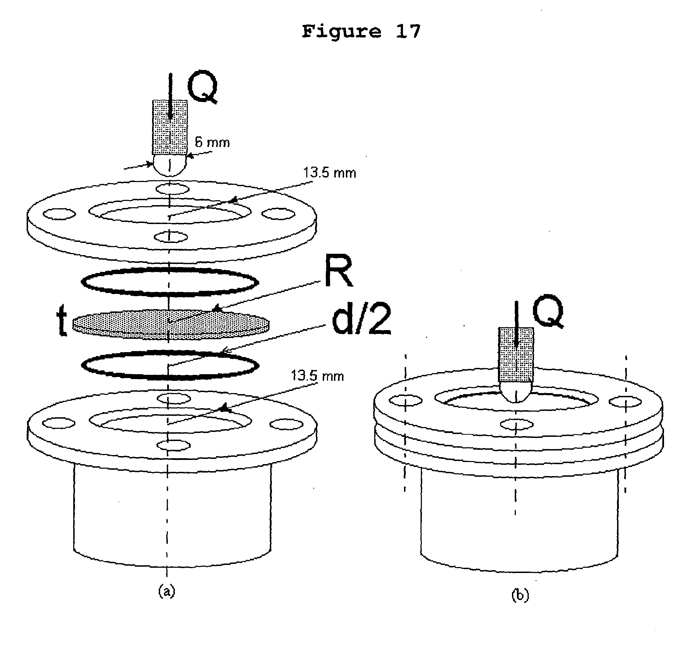

To check the accuracy of the design criteria, rupture disks were tested as shown in Figure 15 and subsequently by high pressure experimental bench tests carried out for that purpose.
The schematic of the bench tests is shown in Figure 17.
The dimensions of the components used on the test bench were as follows:

- Diameter of inner flange d = 27 mm
- Diameter of rupture disk 2R with thickness t
- Diameter of stainless steel ball = 6 mm

The concentrated load Q is applied by a mechanical testing machine with controlled displacement. After establishing the mechanical features on the basis of geometry, it is possible to calculate the loads Q simulating a given rupture pressure on the basis of the size of the rupture disk. ESP glass disks were tested with diameter 2R of 33 mm and thicknesses of 2 and 4 mm.
Table 8 shows the geometrical data for the disk, the predicted $Q_{max}$ according to equation 34 (with MOR for the two biaxial tests), the measured $Q_{max}$ according to the configuration of Figure 15 and the $p_{max}$ simulated by the load $Q_{max}$ (according to equation 36). Specifically, Table 8 reports the results of experimental verification - R and t being the radius and thickness of the ESP disk, respectively, $Q_{max}^{P3B}$ the predicted rupture load on the basis of the MOR established by the "Piston on three balls" test, $Q_{max}^{BOR}$ the predicted rupture load on the basis of the MOR established by "Ball on ring" test, $p_{max}^{predicted}$ the predicted rupture pressure on the basis of equation 36 and $p_{max}^{measured}$ the measured rupture pressure on the basis of equation 32 (d=27mm, see the configuration of the Figure 15).

Table 8.

| R (mm) | t (mm) | $Q_{max}^{P3B}$ (N) | $Q_{max}^{BOR}$ (N) | $Q_{max}^{meas.}$ (N) | $p_{max}^{predicted}$ (MPa) | $p_{max}^{measured}$ (MPa) |
|---|---|---|---|---|---|---|
| 16.5 | 1.60 | 357 | 358 | 357 | 3.7 | 3.7 |
| 16.5 | 1.56 | 336 | 338 | 326 | 3.5 | 3.4 |
| 16.5 | 1.61 | 362 | 363 | 374 | 3.8 | 3.9 |
| 16.5 | 1.60 | 355 | 356 | 349 | 3.7 | 3.6 |

Table 8.  (continued)

| R (mm) | t (mm) | $Q_{max}^{P3B}$ (N) | $Q_{max}^{BOR}$ (N) | $Q_{max}^{meas.}$ (N) | $p_{max}^{predicted}$ (MPa) | $p_{max}^{measured}$ (MPa) |
|---|---|---|---|---|---|---|
| 16.5 | 1.61 | 360 | 361 | 333 | 3.8 | 3.5 |
| 16.5 | 1.63 | 370 | 372 | 373 | 3.9 | 3.9 |
| 16.5 | 1.61 | 358 | 359 | 344 | 3.7 | 3.6 |
| 16.5 | 1.56 | 335 | 337 | 351 | 3.5 | 3.7 |
| 16.5 | 3.84 | 2195 | 3546 | 3467 | 28.8 | 28.2 |
| 16.5 | 3.84 | 2193 | 3541 | 3307 | 28.7 | 26.9 |
| 16.5 | 3.85 | 2199 | 3552 | 3670 | 28.8 | 29.8 |
| 16.5 | 3.82 | 2171 | 3507 | 3521 | 28.5 | 28.7 |
| 16.5 | 3.85 | 2201 | 3554 | 3505 | 28.8 | 28.5 |
| 16.5 | 3.84 | 2198 | 3550 | 3608 | 28.8 | 29.3 |
| 16.5 | 3.85 | 2203 | 3558 | 3563 | 28.8 | 28.9 |
| 16.5 | 3.84 | 2198 | 3550 | 3516 | 28.8 | 28.6 |
| 16.5 | 3.84 | 2187 | 3533 | 3504 | 28.8 | 28.5 |
| 16.5 | 3.84 | 2198 | 3550 | 3507 | 28.7 | 28.5 |
| 16.5 | 3.84 | 2194 | 3543 | 3577 | 28.8 | 29.1 |
| 16.5 | 3.84 | 2193 | 3541 | 3535 | 28.5 | 28.7 |
| 16.5 | 3.85 | 2203 | 3558 | 3503 | 28.8 | 28.5 |
| 16.5 | 3.84 | 2195 | 3546 | 3496 | 28.8 | 28.4 |
| 16.5 | 3.85 | 2199 | 3552 | 3554 | 28.8 | 28.9 |

It is clear from the experimental data that the MOR measured by the "Piston on three balls" test cannot be used at the design stage. On the other hand, using the MOR derived from the "Ball on ring" test, the values for $Q_{max}$ are in line with experimental data.

Experimental check on high pressure test bench

The last check carried out on the disks is an operating test on a high pressure test bench created especially for that purpose.

The equipment comprises:

- a manual water pump (capacity 1 litre) able to reach a maximum pressure of 385 bar
- an instantaneous pressure read-out (analogical gauge from 0-400 bar)
- a flange containing a disk under pressure

The flange assembly was designed specifically for an operating configuration with a pure support (by inner O-ring) for the glass disk.

Rupture tests were carried out (at high load speeds) on annealed, single ion-exchanged and ESP glass disks.

Table 9 shows the predicted and measured rupture pressure values for ESP disks. Specifically, Table 9 reports the rupture pressure values derived from high pressure experimental bench tests compared with the values predicted by design criteria.

Table 9.

| disk ESP | $p_{max}^{predicted}$ (bar) | $p_{max}^{measured}$ (bar) |
|---|---|---|
| Y2d 2t | 38 | 35-40 |
| Y4d 2t | 252 | 240-260 |

These results give rise to useful considerations about the fragmentation of the glass on failure of the rupture disk.

Upon failure ESP glass rupture disks are more finely fragmented (in the maximum load area) than annealed disks. Disks which have undergone single ion-exchange also have fairly fine fragmentation (due solely to the high elastic energy in the breaking phase) but do not match ESP glass disks (whose fragmentation is due more to microcracking than to stored elastic energy).

Of course, without prejudice to the underlying principle of the invention, the details and embodiments may vary, also significantly, with respect to what has been described and shown, by way of examples only, without departing from the scope of the invention, as depicted by the claims that follow.

<u>REFERENCES</u>

[1]  UNI 10198 Norm, "Banchi per prove di rottura a temperatura ambiente dei dispositivi a frattura prestabilita. Requisiti generali", September 1993.

[2]  ASME Code, section VIII, div. I, edition 1998.

[3]  Schlesinger KG Catalogue, "Dischi di rottura".

[4]  G.McLellan, E.Shand, "Glass Engineering Handbook", McGraw Hill, 3rd ed.,1984.

[5]  V.M.Sglavo, D.J.Green, "Indentation Determination of Fatigue Limits in Silicate Glasses", J.Am.Ceram.Soc., n.82, 1269-74, 1999.

[6]  ASTM E1356-91, "Standard Test Method for $T_g$ by Differential Scanning Calorimetry".

[7]  A.F.Kirstein, R.M.Wolley, "Symmetrical Bending of Thin Circular Elastic Plates on Equally Spaced Point Supports", J. Res. Natl. Bur. Stand., 71C, 1967.

[8]  D.J.Green, "An Introduction to the Mechanical Properties of Ceramics", Cambridge Univ. Press, 1998.

[9]  D.K.Shetty et al., "Biaxial Flexure Tests for Ceramics", Ceramic Bulletin, vol. 59, n.12, 1980.

[10]  ASTM F394-78, "Standard Test Method for Biaxial Flexure Strength of Ceramics Substrates".

[11]  ASTM C158-84, "Standard Test Method for Strength of Glass by Flexure".

[12]  V.M.Sglavo, D.Green, "Flaw-Insensitive Ion-Exchangeed Glass: I, Theotetical Aspects", J. Am. Ceram. Soc., 84, 2001.

[13]  V.M.Sglavo, D.Green, "Flaw-Insensitive Ion-Exchangeed Glass: II, Production and Mechanical Performance", J. Am. Ceram. Soc., 84, 2001.

[14]  A.Y.Sane, A.R.Cooper, "Stress Builup and Relaxion During Ion Exchange Strengthening of Glass", J.Am.Ceram.Soc., n.70, 1987.

[15]  C.W. Sinton, W.C. LaCourse, M.J. O'Connell, "Variations in $K^+$-$Na^+$ ion exchange depth in commercial and experimental float glass compositions", Mat. Research Bulletin, Vol.34, 2351-2359, 1999

**Claims**

1. ESP glass rupture disk, **characterized in that** said rupture disk has a failure resistance higher than 320 MPa.

2. ESP glass rupture disk according to claim 1, **characterized in that** said rupture disk presents a coefficient of variability of the failure resistance lower than 4%.

3. ESP glass rupture disk according to any one of the preceding claims, **characterized in that** said rupture disk presents a fatigue exponent higher than 40 and a critical velocity lower than 5 μm/s.

4. ESP glass rupture disk according to any one of the preceding claims, **characterized in that** said ESP glass contains $Na_2O$ in weight percent less than 12%, CaO in weight percent greater than 10% and MgO in weight percent greater than 3%.

5. ESP glass rupture disk according to claim 1, **characterized in that** said rupture disk having thickness t, radius R, failure resistance $\sigma_{f,biax}$ and being the diameter of said rupture disk support d, presents a rupture pressure $p_{max}$ higher than working operative pressure $p_{op}$ and dependent in an algorithmic manner by the ratio t/d.

6. ESP glass rupture disk according to claim 5, **characterized in that** said rupture pressure $p_{max}$ depends on said ratio t/d as an equation of factor h.

7. ESP glass rupture disk according to claim 6, **characterized in that** said factor h is equal to 2.

8. ESP glass rupture disk according to any of the claims 5 to 7, **characterized in that** said rupture pressure $p_{max}$ depends on said ratio t/d according to the algorithmic relation:

$$p_{max} = \frac{\sigma_{f,biax}}{k_2} \left(\frac{t}{d}\right)^2$$

    wherein $k_2$ is a stress factor.

9. ESP glass rupture disk according to claim 8, **characterized in that** said stress factor $k_2$ is equal to 0,3025.

10. ESP glass rupture disk according to any one of the claims 5 to 9, **characterized in that** said rupture disk having the ratio d/t greater than 5 presents rupture pressure $p_{max}$ in the range 3 to 30 MPa.

11. Method for manufacturing ESP glass rupture disk, **characterized in that** said ESP glass rupture disk is formed by i) annealing a starting glass, ii) performing a first ion exchange wherein a plurality of a first plurality of ions comprising a first element are exchanged with a second plurality of ions comprising a second element and having a larger radius than said first ions and iii) performing a second ion exchange wherein a plurality of said second ions are exchanged to a plurality of third ions comprising said first element, whereby said rupture disk has a failure resistance higher than 320 MPa.

12. Method according to claim 11, **characterized in that** said annealing phase is performed at a temperature in the range of 500-580°C and for a period of time in the range of 2-24 hours.

13. Method according to claim 11, **characterized in that** said first ion exchange phase is performed at a temperature in the range of 400-475°C and for a period of time in the range of 4-120 hours.

14. Method according to claim 5, **characterized in that** said second ion exchange phase is performed at a temperature in the range of 375-425°C and for a period of time in the range of 0.1-2 hours.

15. Method according to claim 11, **characterized in that** said first ion exchange phase exchanges potassium ions for sodium ions and said second ion exchange phase exchanges sodium ions for potassium ions.

16. Method for the design of an ESP glass rupture disk subject to failure at a rupture pressure $p_{max}$ higher than working operative pressure $p_{op}$, said rupture disk having thickness t, radius R and failure resistance $\sigma_{f,biax}$ and being the diameter of said rupture disk support d, **characterized in that** said method includes the operation of evaluating the ratio t/d in an algorithmic manner starting from said rupture pressure $p_{max}$.

17. Method according to claim 16, **characterized in that** said ratio t/d is evaluated as an equation of factor 1/h.

18. Method according to claim 17, **characterized in that** said factor 1/h is equal to 1/2.

19. Method according to any one of the claims 16 to 18, **characterized in that** said algorithmic relation is

$$p_{max} = \frac{\sigma_{f,biax}}{k_2} \left(\frac{t}{d}\right)^2$$

    wherein $k_2$ is a stress factor.

20. Method according to claim 19, **characterized in that** said stress factor $k_2$ is equal to 0.3025.

EP 1 517 073 A1

Figure 1

Figure 4

Figure 2

Figure 5

Figure 6

Figure 3

(a)

(b)

19

FIGURE 7

EP 1 517 073 A1

Figure 8

EP 1 517 073 A1

Figure 9

Figure 10

EP 1 517 073 A1

Figure 11

Figure 12

EP 1 517 073 A1

## Figure 13

(a)                    (b)

## Figure 14

Figure 15

Figure 16

Figure 17

EP 1 517 073 A1

**European Patent Office**

**EUROPEAN SEARCH REPORT**

Application Number

EP 03 02 1294

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 1 194 555 A (OWENS-ILLINOIS) 10 June 1970 (1970-06-10) * page 9, line 7 - line 25 * --- | 1,11 | F16K17/16 |
| A | FR 1 348 287 A (CORNING GLASS WORKS) 4 January 1964 (1964-01-04) * page 1, right-hand column, last paragraph - page 2, left-hand column, paragraph 1 * * page 4, left-hand column, last paragraph - right-hand column, paragraph 1 * --- | 1,4,11 | |
| A | US 5 979 477 A (STILLINGS MATTHEW J) 9 November 1999 (1999-11-09) * column 7, line 51 - line 62; figure 2 * --- | 1,11 | |
| A | EP 0 018 148 A (ELECTROFAB & ENG) 29 October 1980 (1980-10-29) * page 7, line 7 - line 10; figures 1-4 * ----- | 1,11 | |
| | | | TECHNICAL FIELDS SEARCHED (Int.Cl.7) F16K |

The present search report has been drawn up for all claims

| Place of search | Date of completion of the search | Examiner |
|---|---|---|
| THE HAGUE | 20 February 2004 | Christensen, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

## ANNEX TO THE EUROPEAN SEARCH REPORT
## ON EUROPEAN PATENT APPLICATION NO.

EP 03 02 1294

This annex lists the patent family members relating to the patent documents cited in the above-mentioned European search report.
The members are as contained in the European Patent Office EDP file on
The European Patent Office is in no way liable for these particulars which are merely given for the purpose of information.

20-02-2004

| Patent document cited in search report | | Publication date | Patent family member(s) | | Publication date |
|---|---|---|---|---|---|
| GB 1194555 | A | 10-06-1970 | DE | 1596950 A1 | 01-04-1971 |
| | | | FR | 1542517 A | 18-10-1968 |
| | | | NL | 6708452 A ,B | 18-12-1967 |
| | | | US | 3990877 A | 09-11-1976 |
| | | | US | 3992180 A | 16-11-1976 |
| | | | US | 3891419 A | 24-06-1975 |
| | | | US | 3992179 A | 16-11-1976 |
| | | | US | 3843342 A | 22-10-1974 |
| | | | US | 3846099 A | 05-11-1974 |
| | | | US | 3498775 A | 03-03-1970 |
| | | | US | 3637453 A | 25-01-1972 |
| FR 1348287 | A | 04-01-1964 | NONE | | |
| US 5979477 | A | 09-11-1999 | NONE | | |
| EP 0018148 | A | 29-10-1980 | DE | 3062936 D1 | 09-06-1983 |
| | | | EP | 0018148 A1 | 29-10-1980 |